**Europäisches Patentamt**

**European Patent Office**

**Office européen des brevets**

(11) Publication number: **0 151 574**
**B1**

# EUROPEAN PATENT SPECIFICATION

(45) Date of publication of patent specification: **28.09.88**

(51) Int. Cl.⁴: **E 21 B 17/042, F 16 L 15/00**

(21) Application number: **84901681.1**

(22) Date of filing: **05.04.84**

(86) International application number:
**PCT/US84/00501**

(87) International publication number:
**WO 84/04351 08.11.84 Gazette 84/26**

(54) **IMPROVED TUBULAR CONNECTION.**

(30) Priority: **29.04.83 US 489739**

(43) Date of publication of application:
**21.08.85 Bulletin 85/34**

(45) Publication of the grant of the patent:
**28.09.88 Bulletin 88/39**

(84) Designated Contracting States:
**AT BE CH DE FR GB LI LU NL SE**

(56) References cited:
**GB-A- 412 446**
**GB-A- 786 652**
**US-A-2 239 942**
**US-A-2 992 019**
**US-A-3 100 656**
**US-A-3 359 013**
**US-A-4 298 221**
**US-E- 30 647**

(73) Proprietor: **HYDRIL COMPANY**
**714 West Olympic Boulevard**
**Los Angeles California 90015 (US)**

(72) Inventor: **REEVES, Doyle, E.**
**11310 Colonial Trail**
**Houston, TX 77066 (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates generally to the field of tubular connections and more specifically to the field of threaded connections for securing flow conduits to form a desired continuous flow path.

The use of threaded end connections for joining flow conduits in an end-to-end relationship to form a continuous flow path or channel for transporting fluid under pressure is well known. The art of threaded end connection is particularly well known in the use of wells for the production of hydrocarbons and other forms of energy from subsurface earth formations. Drill pipe, well casing and production tubing, commonly known collectively as oilfield tubular goods, all utilize threaded end connections for operably securing and sealing with the adjacent conduit section or pipe joint. Examples of such said threaded end connections for use on oilfield tubular goods are disclosed in US-A-2,239,942, 2,992,019 and 3,359,013 which were all assigned to assignee of the present invention.

In US-E-30,647, also assigned to the assignee of the present invention, there is disclosed a tubular connection having a unique thread form or structure which provides an unusually strong connection while controlling the stress and strain in the connected pin and box members within acceptable levels. The helical threads are tapered in thread width to provide a wedge-like engagement substantially simultaneously with both load flanks to limit rotational make-up of the connection. The taper of the thread width as well as the taper of the flank shoulder angles are two of the variables that may be used to control the stress and strain induced in the pin and box upon forceable make-up.

When making up in the field, a threaded connection manufactured in accordance with the disclosure of the Blose reissue patent, liquid and paste-like thread lubricants have been trapped in the thread clearance area that was provided between the thread root and crest. The trapped fluid may, under certain circumstances, give a false indication of the torque value to which the connection is forceably made up. If the connection is not properly engaged or torqued up to the predetermined level, the preload stress and strain and anticipated performance level or strength of the threaded connection will not be achieved. While such reduction in the performance level is not properly attributable to a deficiency in the connection or its design, the consequences of improper make-up is an unacceptable performance level for the threaded connection.

Frequently, oilfield tubular goods must be assembled or rotatably made up under extremely adverse conditions. In addition, the threaded end connections may experience deterioration or damage in handling and transportation to the well site where they are to be used. In addition to these general factors, the particular thread structure disclosed in US-E-30,647 has exhibited some tendency to trap liquid or paste-like thread lubricants in the radial clearance areas between the thread roots and crests which can give a false indication of the torque value used for forceably tightening the connection if proper care is not used in assembly. Unless the connection is prooerly tightened to a prescribed level, the performance of the threaded connection will be significantly reduced. While the liquid can and will flow from the trapped area if the torque to maintained on the connection for a -sufficient period of time, the installation, equipment and personnel running or installing the oilfield conduits could not be certain that torquing had been properly accomplished.

Accordingly, the object of the present invention is to provide thread structure which increases the probability or likelihood of proper make-up of the threaded connection.

The present invention provides a threaded connection adapted for releasably securing a first member with a second member, including a first member having a tapered external generally dove-tail shaped helical thread formed thereon and forming a longitudinal axis for the threaded connection, and a second member having a tapered internal generally dovetail-shaped helical thread formed thereon, said internal helical thread interengaged with said external helical thread for securing said first member with said second member, said internal and external helical threads having a lubricant therebetween, each of said external thread and said internal thread having a flat thread crest wall disposed between and adjacent a first and a second thread flank wall and having a flat thread root wall disposed adjacent one of said flank walls, said root walls and said crest walls defining a thread clearance area therebetween with said lubricant disposed in said clearance area, and said root walls and said crest walls being parallel to the longitudinal axis of the connection, an axial distance at the crest wall between said first thread flank wall and said second thread flank wall defining a thread width, said axial thread width changing at a uniform rate substantially the entire helical length of the thread, said thread load flank walls on each member being fully engaged at substantially the same time upon forceable rotational make-up of the threaded connection, characterized in that the root walls and the crest walls are dimensioned to move toward engagement substantially eliminating said clearance area and forming metal-to-metal seals upon make-up of the thread connection, after which continued forceable make up of the thread connection moves the flank walls into metal-to-metal sealing engagement at substantially the same time upon completion of the rotational makeup of the thread connection, thus excluding any trapping of lubricant during make-up of the thread connection.

The present invention precludes the trapping of the thread lubricant in the thread area and thereby prevents the creation of a false make-up torque value during make-up which could possibly result in a lower than designed preload condition for the connection.

In the drawings:

Figure 1 is a side view, in section, of the prior art thread structure;

Figure 2 is a side view, in section, of a prior art connection having the prior art thread structure;

Figure 3 is a side view, partially in section, of a pin member having the thread structure of the present invention formed thereon;

Figure 4 is a side view, partially in section, of a threaded and coupled connection of the present invention;

Figure 5 is a side view, in section, of a tubular conduit having an external pin thread structure of the present invention formed thereon; and

Figure 6 is a partial side view, in section, of a coupling having another form on the thread structure of the present invention formed internally thereon.

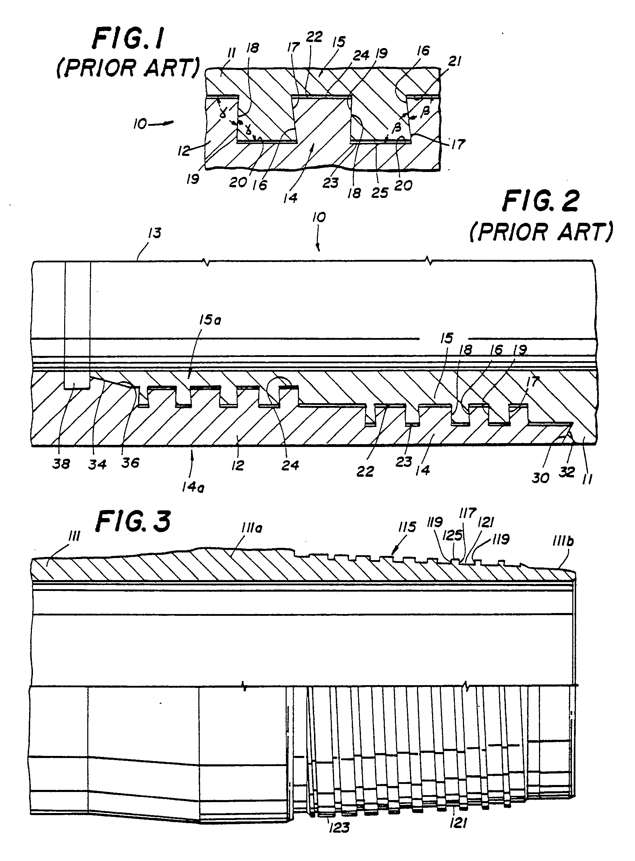

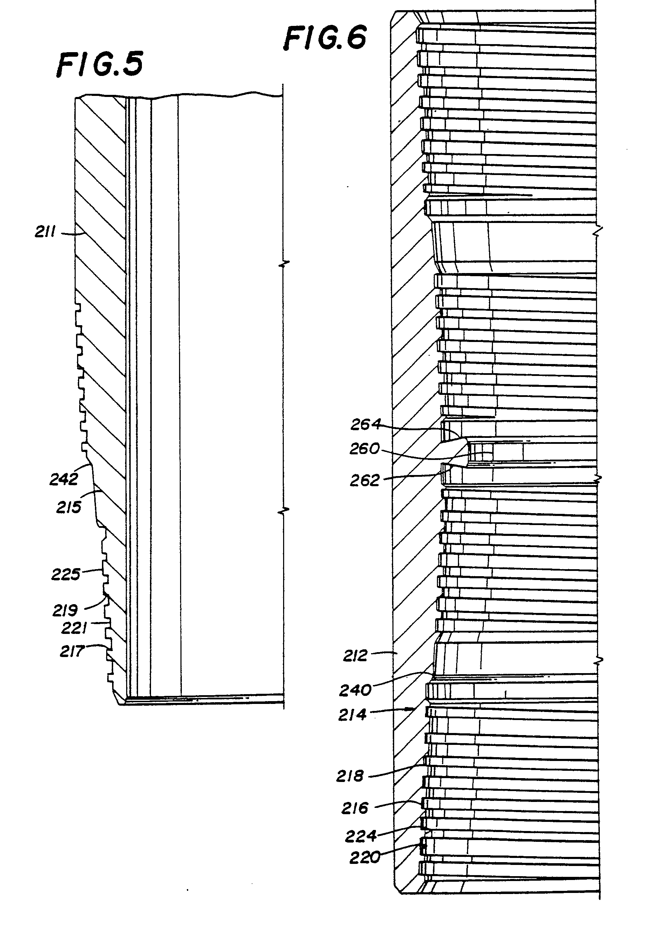

The prior art Figures 1 and 2, correspond to Figs. 2 and 6, respectively of US-E-30,647 and for background purposes a brief description of this prior art construction is set forth hereinbelow.

The threaded connection or pipe joint, generally designed 10, includes a first or pin member 11 and a second or box member 12, respectively, with either of both of those two members also defining the longitudinal axis 13 of the made-up connection ·10. As illustrated in Figure 2, the box member 12 has an internal thread structure 14 formed thereon adapted to interengage with a complementary external thread structure 15 formed on the pin 11 for mechanically securing in a releasable manner the members 11 and 12 in the conventional manner. Helical or spiral threading or threads 14 and 15 have a dove-tail interfit such as a first load flank wall 16 of the thread 14 which engages with complementary load flank wall 17 formed on the thread 15. The opposite or second flank wall 18 formed by the thread structure 14 engages the complementary load flank wall 19 formed by the thread structure 15.

The angle α is formed between the flank wall 18 and the root wall 20 of the thread 14. Likewise, the angle α is also formed between the load flank wall 19 and the root wall 21 of the thread structure 15. The flank wall 16 and the root wall 20 as well as the flank wall 17 and the root wall 21 of the thread 15 form a second angle ß. The angles α and ß are preferably acute angles for providing a taper to the load flanks. However, it should be understood that in that in the semidove-tail version either one of the angles α and ß can be ninety (90) degrees which would place the load flank wall in a condition perpendicular or normal to the longitudinal axis 13 of the connection. In the disclosure of the US-E-30,647, clearances 22 and 23 are provided between the root walls 20 and 21 and the thread tips 24 and 25 of the threads 14 and 15, respectively. As will be noted in Figure 2, the helical thread 14 formed on the first or box member 12 has a greater thread width or pitch distance (i.e. in an axial direction) between the angled or tapered flanks 16 and 18 at the thread tip 24 than at the thread root 20; likewise, helical thread 15 has a greater axial pitch distance between flank 17 and 19 at the thread tip 25 than at the thread root 21. Further, each thread 14 and 15 has progressively reducing thread width, or pitch distance, along the helical length of each thread to provide a tapered wedge thread which engages both load flanks 16 and 18 of the thread 14 with both complementary load flanks 17 and 19 of the thread 15 at substantially the same time. Prior to completion of relative circumferential rotational make-up and while in the partially made up condition, there are gaps between the threads 14 and 15. In the embodiment illustrated from the U.S. reissue patent, the maximum thread width of the tapered thread is no greater than twice the thread width at the narrowest point for a corresponding location on a load flank.

The connection 10 illustrated in Figure 2 is provided with a multiple or two step cylindrical thread interengagement having a stop shoulder 30 formed on the pin member 11 for engaging a corresponding stop shoulder 32 on the box member 12. Because the interengaged threads 14 and 15 also serve as a make-up stop shoulder, it may be desired to produce a clearance gap between the shoulders 30 and 32 if desired. The connection 10 is also provided with the conventional conical metal-to-metal seal zone on the pin 11 at 34. A companion sealing surface 36 formed on the box 12 engages the pin sealing surface 34 to block passage of fluid therebetween. In the illustrated embodiment of Figure 2 a plastic seal ring 38 such as disclosed in US-A-3,100,656 may be employed. Such plastic ring 38 is preferably used with internally lined pipe for providing a continuous corrosion-resistant flow path.

Also in the embodiment illustrated in Figure 2, the thread load flank faces are formed a common radial distance or radius from the longitudinal axis 13 of the joint to provide a cylindrical rather than a tapered or uniformly changing diameter thread. The thread structure 14 and 15 is formed on a larger or outer common diameter while the second step of interengaged threads referenced as 14a and 15a are formed on a smaller radius or distance from the longitudinal axis 13 of the connection 10. The two step thread, which may be cylindrical or tapered in diameter, is recognized for its speed of assembly during installation operations as is known in the art.

In the embodiment of the present invention illustrated in Figure 3 like reference characters, increased by 100, have been used to designate like parts to simplify and shorten the written description. A pin member 111 is provided with external helical thread structure 115 on an upset end portion 111a of the pin 111. It being understood however that the thread structure of the present invention is equally well suited for non-upset or plain end pipe. The tapered thread width or wedge-like structure 115 is also provided with one or both angled or dove-tail load flanks 117 and 119. The thread root 121 separates the facing tapered load flank shoulders 117 and 119 which are disposed adjacent thereto. The thread crest 125 is disposed adjacent the load flanks 117 and 119 but are alternately separated by the thread roots 121 in the conventional manner. The thread width between the outwardly facing flank shoulders 117 and 119 below the thread crest 125 varies progressively at a uniform rate substantially the entire helical length of the thread 115. This provides the tapered wedge thread width for fully engaging both thread load flanks 117 and 119 at substantially the same time upon forceable rotational make-up of the threaded connection. In viewing the lower portion of Figure 3, it will be immediately appreciated that the thread width decreases or varies progressively at a much greater rate from that illustrated in the embodiment of Figure 2. In particular, it has been found desirable to increase the thread width at the widest portion in the range of approximately four times the thread width at the narrowest portion at the same thread location. This contrasts with the embodiment illustrated in Figure 2 where the thread width at the widest portion is only twice the thread width at the narrowest portion. The pin or tube member 111 may be provided with an identical or different thread structure on the other end (not illustrated) in the conventional manner.

In the embodiment of Figure 3, the thread roots 121 and the thread crests 125 are dimensioned to eliminate the formation of the radial clearance illustrated at 22 and 23 in Figures 1 and 2. By eliminating the radial clearance between the thread roots 120 and 121 and crests 124 and 125 with the comolementary thread structure, the possibility of creating an expansible chamber upon connection make-up that can entrap the liquid or paste-like thread lubricant therein to produce a false torque reading is greatly minimized if not entirely reduced. In order to achieve this result the roots 120 and 121 and crests 124 and 125 of the threads may be dimensioned to be in contact with each other upon make-up and may, if desired, be dimensioned to provide a radial intereference for inducing a controlled stress in the pin member 111 upon forceable make-up.

The pin member 111 may also be provided with the conventional metal-to-metal seal area 111b for blocking leakage of fluid between the pin 111 and the box member when the connection is made up in the usual manner. Because the thread clearance has been eliminated the thread area may also be used on the sealing zone if desired.

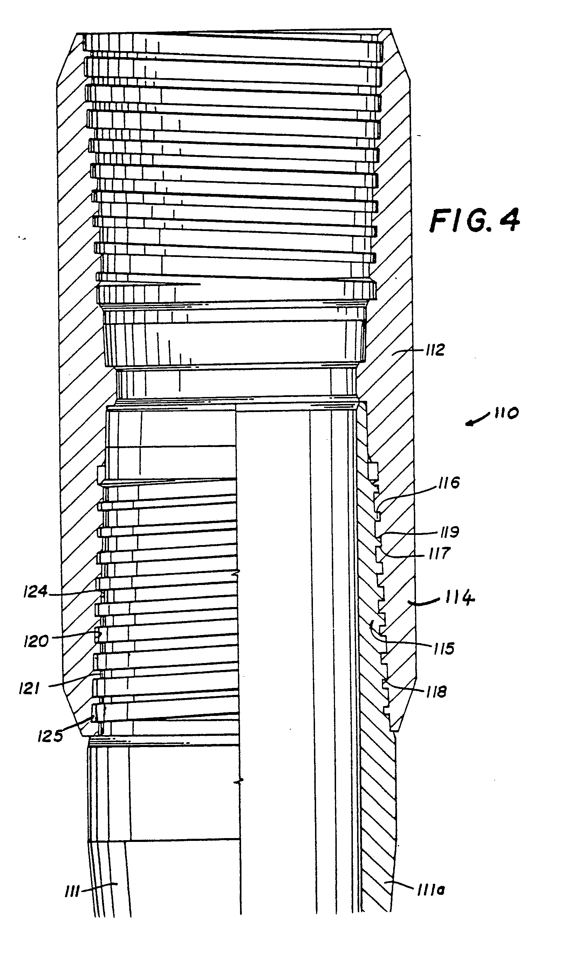

Figure 4 illustrates the pin 111 of Figure 3 threadably made up in a box member or coupling 112 to form a tube and coupled (T & C) threaded connection 110. The coupling 112 is provided with the internal or box complementary thread structure 114 for making up with the pin 111 in the usual manner. When assembled in the manner illustrated the thread roots 120 and 121 coact with the thread crests 124 and 125 to prevent formation of undesired radial clearance that may trap thread lubricant during assembly.

The upper portion of the box 112 is illustrated with an identical thread structure facing in the opposite direction for connecting with a tube, pipe or conduit disposed adjacent to and above the box 112 in the usual manner. If desired a different thread structure may be provided in the upper portion of the coupling 112.

In the embodiment of Figures 5 and 6, like reference characters, increased by 200, have been used to designate like parts to simplify and shorten the written description. A two step angled or tapered (i.e., varying thread diameter) is illustrated rather than a cylindrical two step thread such as disclosed in Figure 2. However, the present invention is equally well suited for use on cylindrical (constant pitch diameter) type thread of Figure 2 when modified in accordance with the present invention to eliminate the radial clearances 22 and 23. This is accomplished by tapering only roots 121 and crests 125 while maintaining a constant pitch diameter. The pin 211 has an external helical thread structure 215 formed in accordance with the present invention while the box 212 is provided with two internal helical thread structures 214 facing in opposite directions for coupling with adjacent tubes in the conventional manner. In Figure 6 it is again to be understood that a different thread profile or structure may be provided at one end of the coupling or box member 212. Disposed substantially equidistant from the outer ends of the box 212 is an inwardly projecting collar 260 forming a downwardly facing annular shoulder 262 and an upwardly facing shoulder 264. Because the tapered or wedge configuration of the threads 214 and 215 serves as stop shoulders to limit rotational make-up of the box 212 relative to the pin 211; the shoulder 262 is not brought in contact with the downwardly facing shoulder 262 of the collar 260. However, the collar 260 serves to provide a substantially turbulent-free flow conductor to minimize the effect of flow erosion on the box 212.

The sealing area 240 of the box 212 is located intermediate of the two steps of tapered threads. The sealing area 240 of the box engages the seal area 242 formed on the pin 211 intermediate the two spaced thread steps to form a metal-to-metal seal to block leakage of fluid between the box 212 and the pin 211 in a conventional manner. While an intermediate seal is illustrated it should be understood that other seal locations and types of seals are equally well suited for use with the present invention.

The foregoing disclosure and description of the invention are illustrative and explanatory thereof, and various changes in the size, shape and materials, as well as in the details of the illustrated construction, may be made without departing from the scope of the invention as claimed.

**Claims**

1. A threaded connection adapted for releasably securing a first member with a second member, including a first member having a tapered external generally dove-tail shaped helical thread formed thereon and forming a longitudinal axis for the threaded connection, and a second member having a tapered internal generally dovetail-shaped helical thread formed thereon, said internal helical thread interengaged with said external helical thread for securing said first member with said second member, said internal and external helical threads having a lubricant therebetween, each of said external thread and said internal thread having a flat thread crest wall disposed between and adjacent a first and a second thread flank wall and having a flat thread root wall disposed adjacent one of said flank walls, said root walls and said crest walls defining a thread clearance area therebetween with said lubricant disposed in said clearance area, and said root walls and said crest walls being parallel to the longitudinal axis of the connection, an axial distance at the crest wall between said first thread flank wall and said second thread flank wall defining a thread width, said axial thread width changing at a uniform rate substantially the entire helical length of the thread, said thread load flank walls on each member being fully engaged at substantially the same time upon forceable rotational make-up of the threaded connection, characterized in that the root walls (120, 121) and the crest walls (124, 125) are dimensioned to move toward engagement substantially eliminating said clearance area and forming metal-to-metal seals upon make-up of the thread connection, after which continued forceable make up of the thread connection moves the flank walls (116, 117) into metal-to-metal sealing engagement at substantially the same time upon completion of the rotational makeup of the thread connection, thus excluding any trapping of lubricant during make-up of the thread connection.

2. The connection of claim 1, characterized in that said threads (114, 115) are cylindrical and have a single radial distance relative to the longitudinal axis formed by the threaded connection (110).

3. The connection of claim 1, characterized in that said threads (214, 215) have a uniformly changing radial distance relative to the longitudinal axis formed by the threaded connection (210).

4. The connection of claims 1, 2 or 3, characterized in that said root walls (120, 212; 220, 221) and said crest walls (124, 125; 224, 225) are dimensioned to have a radial interference fit therebetween for inducing a controlled stress in said first member (111, 211) and said second member (112, 212) upon rotational make-up of the threaded connection (110, 210).

5. The connection of any of claims 1 to 4, characterized in that the threaded width of the thread members (111, 112) at the widest portion is at least twice the thread width at the narrowest portion.

6. The connection of any of the preceding claims, characterized in that the thread width of the thread members (111, 112) at the widest portion is no more than four times the thread width at the narrowest portion.

7. The connection of any of the preceding claims, characterized in that one or both of said first and said second thread flanks (116, 117; 118, 119) are angled relative to a plane perpendicular to the longitudinal axis formed by the threaded connection (110).

8. The connection of any of the preceding claims, characterized by conventional means (111b) for sealing between said first member (111) and said second member (112) to block passage of fluid therebetween.

9. The thread structure as set forth in any of claims 1 to 8, wherein said first and second members comprise, respectively, mating pin and box members, and wherein a second tapered external generally dove-tail shaped helical thread is formed on said pin member; a second tapered internal generally dove-tail shaped helical thread also being formed on said box member; said second pin thread and the second thread box thread each having a flat thread crest wall disposed between and adjacent a first and second thread flank wall and having a flat thread root wall disposed adjacent one of said flank walls, the distance between said first thread flank wall and said second thread flank wall defining a thread width, said root walls and said crest wall defining a thread clearance area therebetween with said lubricant disposed in said clearance area, and said root walls and said crest walls being parallel to the longitudinal axis of the connection, an axial distance at the crest wall between said first thread flank wall and said second thread flank wall defining a thread width, said axial thread width changing at a uniform rate substantially the entire helical length of the thread, said thread load flank walls on each member being fully engaged at substantially the same time upon forceable rotational make-up of the thread connection; characterized in that the root walls (120, 121) and the crest walls (124, 125) are dimensioned to move toward engagement substantially eliminating said clearance area and forming metal-to-metal seals upon make-up of the thread connection, after which continued forceable make-up of the thread connection moves the flank walls (116, 117) into metal-to-metal sealing engagement at substantially the same time upon completion of the rotational make-up of the thread connection.

**Patentansprüche**

1. Schraubverbindung zum lösbaren Befestigen eines ersten Gliedes an einem zweiten Glied, mit einem ersten Glied, das mit einem verjüngten, allgemein schwalbenschwanzförmigen, wendelförmigen Außengewinde ausgebildet ist, das eine Längsachse für die Schraubverbindung bestimmt, und mit einem zweiten Glied, das mit einem allgemein schwalbenschwanzförmigen verjüngten, wendelförmigen Gewinde ausgebildet ist, das zum Befestigen des ersten und des zweiten Gliedes aneinander mit dem wendelförmigen Außengewinde verschraubt ist, wobei zwischen dem wendelförmigen Innen- und dem wendelförmigen Außengewinde ein Schmiermittel vorhanden ist, das Außengewinde und das Innengewinde jeweils eine ebene Bewindekopfwand besitzen, die im Bereich einer ersten und einer zweiten Flankenwand zwischen diesen angeordnet ist, sowie eine ebene Gewindefußwand im Bereich einer der Flankenwände, die genannten Fußwände und Kopfwände einen Gewindefreiraum bestimmen, in dem sich das genannte Schmiermittel befindet, die Fußwände und die Kopfwände zu der Längsachse der Verbindung parallel sind, ein Axialabstand an der Kopfwand zwischen der ersten Gewindeflankenwand und der zweiten Gewindeflankenwand eine Gewindebreite bestimmt, die axiale Gewindebreite sich im wesentlichen über die ganze Länge der Gewindewendel gleichmäßig ändert, und beim durch Drehen unter Krafteinwirkung erfolgenden Herstellen der Schraubverbindung die lastaufnehmenden Gewindeflankenwände der beiden Glieder sich im wesentlichen gleichzeitig satt aneinander anlegen, dadurch gekennzeichnet, daß die Fußwände (120, 121) und die Kopfwände (124, 125) so bemessen sind, daß sie sich bei der Herstellung der Schraubverbindung zueinander hin bewegen, den Freiraum im wesentlichen beseitigen und Metall-Metall-Abdichtungen herstellen, und beim darauffolgenden, unter Krafteinwirkung erfolgenden Festziehen der Schraubverbindung unter die Flankenwände (116, 117) sich im wesentlichen in dem Zeitpunkt unter Bildung einer Metall-Metall-Abdichtung aneinander anlegen, in dem die Schraubverbindung vollständig festgezogen ist, so daß ein Einschluß von Schmiermittel beim Herstellen der Schraubverbindung verhindert wird.

2. Verbindung nach Anspruch 1, dadurch gekennzeichnet, daß die Gewinde (114, 115) zylindrisch sind und jeweils einen einzigen Radialabstand von der durch die Schraubverbindung (110) bestimmten Längsachse haben.

3. Verbindung nach Anspruch 1, dadurch gekennzeichnet, daß die Gewinde (214, 215) jeweils einen sich gleichmäßig verändernden von der von der Schraubverbindung (210) bestimmten Längsachse haben.

4. Verbindung nach Anspruch 1, 2 oder 3, dadurch gekennzeichnet, daß die Fußwände (120, 121; 220, 221) und die Kopfwände (124, 125; 224, 225) so bemessen sind, daß sie im radialen Preßsitz aneinanderliegen und beim durch Drehen erfolgenden Herstellen der Schraubverbindung (110, 210) in dem ersten Glied (111, 121) und in dem zweiten Glied (112, 212) eine gesteuerte Spannung erzeugtwird.

5. Verbindung nach einem der vorhergehenden Ansprüche 1 bis 4, dadurch gekennzeichnet, daß die Gewindebreite der gewindetragenden Glieder (111, 112) an der breitesten Stelle mindestens das Doppelte der Gewindebreite an der schmalsten Stelle beträgt.

6. Verbindung nach einem der vorhergehenden Ansprüche, dadurch gekennzeichnet, daß die Gewindebreite der gewindetragenden Glieder (111, 112) an der breitesten Stelle höchstens das Vierfache der Gewindebreite an der schmalsten Stelle beträgt.

7. Verbindung nach einem der vorhergehenden Ansprüche, dadurch gekennzeichnet, daß die erste und/oder die zweite Gewindeflanke (116, 117; 118, 119) unter einem Winkel zu einer Ebene angeordnet ist bzw. sind, die zu der von der Schraubverbindung (110) bestimmten Längsachse rechtwinklig ist.

8. Verbindung nach einem der vorhergehenden Ansprüche, gekennzeichnet durch übliche Mittel (111b) zum Abdichten zwischen dem ersten Glied (111) und dem zweiten Glied (112) zwecks Sperrung eines Durchtritts von Fluid zwischen ihnen.

9. Verbindung nach einem der Ansprüche 1 bis 8, dadurch gekennzeichnet, daß das erste und das zweite Glied aus einem Bolzen bzw. einer Buchse bestehen, die ineinanderpassen, daß der Bolzen mit einem zweiten allgemein schwalbenschwanzförmig verjüngten, wendelförmigen Gewinde ausgebildet ist, daß die Buchse ebenfalls mit einem zweiten allgemein schwalbenschwanzförmig verjüngten, wendelförmigen Gewinde ausgebildet ist, daß das zweite Gewinde des Bolzens und das zweite Gewinde der Buchse jeweils eine ebene Gewindekopfwand besitzen, die im Bereich einer ersten und einer zweiten Gewindeflankenwand zwischen diesen angeordnet ist, sowie eine ebene Gewindefußwand im Bereich einer der Flankenwände, wobei der Abstand zwischen der ersten Gewindeflankenwand und der zweiten Gewindeflankenwand eine Gewindebreite bestimmt, die genannten Fußwände und Kopfwände einen Gewindefreiraum bestimmen, in dem sich das genannte Schmiermittel befindet, die Fußwände und die Kopfwände zu der Längsachse der Verbindung parallel sind, ein Axialabstand an der Kopfwand zwischen der ersten Gewindeflankenwand und der zweiten Gewindeflankenwand eine Gewindebreite bestimmt, die axiale Gewindebreite sich im wesentlichen über die ganze Länge der Gewindewendel gleichmäßig ändert und beim durch Drehen unter Krafteinwirkung erfolgenden Herstellen der Schraubverbindung die lastaufnehmenden Gewindeflankenwände der beiden Glieder sich im wesentlichen gleichzeitig satt aneinander anlegen, dadurch gekennzeichnet, daß die Fußwände (120, 121) und die Kopfwände (124, 125) so bemessen sind, daß sie sich bei der Herstellung der Schraubverbindung zueinander hin bewegen, den Freiraum im wesentlichen beseitigen und Metall-Metall-Abdichtungen herstellen, und beim darauffolgenden unter Krafteinwirkung erfolgenden Festziehen der Schraubverbindung unter die Flankenwände (116, 117) sich im wesentlichen in dem Zeitpunkt unter Bildung einer Metall-Metall-Abdichtung aneinander anlegen, in dem die Schraubverbindung vollständig festgezogen ist, so daß ein Einschluß von Schmiermittel beim Herstellen der Schraubverbindung verhindert wird.

## Revendications

1. Une liaison filetée adaptée pour fixer de façon séparable un premier élément avec un second élément, comprenant un premier élément sur lequel est formé un filet hélicoïdal extérieur effilé en forme générale de queue-d'aronde et définissant un axe longitudinal pour la liaison filetée, et un second élément sur lequel est formé un filet hélicoïdal intérieur effilé en forme générale de queue-d'aronde, ledit filet hélicoïdal intérieur étant en prise réciproque avec le filet hélicoïdal extérieur pour fixer ledit premier élément avec ledit second élément, lesdits filets hélicoïdaux intérieur et extérieur comportant entre eux un lubrifiant, chacun parmi le filet extér'ieur et le filet intérieur comportant une paroi de crête de filet plane disposée entre et au voisinage d'une première et d'une seconde paroi de flanc de filet et comportant une paroi de racine de filet plane disposée à proximité de l'une desdites parois de flancs, lesdites parois de racine et lesdites parois · de crête définissant entre elles une zone de jeu de filet, dans laquelle est disposé le lubrifiant, et lesdites parois de racine et lesdites parois de crête étant parallèles à l'axe longitudinal de la liaison, une distance axiale au niveau de la paroi de crête entre ladite première paroi de flanc de filet et ladite seconde paroi de flanc de filet définissant une largeur de filet, ladite largeur de filet axiale variant à un degré uniforme sensiblement sur toute la longueur hélicoïdale du filet, lesdites parois de flancs de charge de chaque élément entrant complètement en contact sensiblement en même temps lors de l'établissement par rotation forcée de la liaison filetée, caractérisée en ce que les parois de racine (120, 121) et les parois de crête (124, 125) sont dimensionnées pour venir en contact en éliminant substantiellement ladite zone de jeu et en formant des étanchéités métal-métal lors de l'établissement de la liaison filetée, après quoi une poursuite de l'établissement forcé de la liaison filetée amène les parois de flancs (116, 117) en contact étanche métal-métal sensiblement en même temps lors de l'achèvement de l'établissement par rotation de la liaison filetée, en excluant ainsi tout emprisonnement de lubrifiant pendant l'établissement de la liaison filetée.

2. La liaison selon la revendication 1, caractérisée en ce que lesdits filets (114, 115) sont cylindriques et ont une seule distance radiale par rapport à l'axe longitudinal formé par la liaison filetée (110).

3. La liaison selon la revendication 1, caractérisée en ce que lesdits filets (214, 215) ont une distance radiale variant uniformément par rapportà l'axe longitudinal formé par la liaison filetée (210).

4. La liaison selon l'une quelconque des revendications 1 à 3, caractérisée en ce que lesdites Parois de racine (120, 121; 220, 221) et lesdites parois de crête (124, 125; 224, 225) sont dimensionnées de façon à créer entre elles un emmanchement radial pour engendrer une contrainte contrôlée dans ledit premier élément (111, 211) et ledit second élément (112, 212) lors d'un établissement de la liaison filetée (110, 210) par rotation.

5. La liaison selon l'une quelconque des revendications 1 à 4, caractérisée en ce que la largeur de filet des éléments filetés (111, 112) dans la partie la plus large est au moins le double de la largeur de filet dans la partie la plus étroite.

6. La liaison selon l'une quelconque des revendications précédentes, caractérisée en ce que la largeur de filet des éléments filetés (111, 112) dans la partie la plus large n'est pas supérieure à quatre fois la largeur de filet dans la partie la plus étroite.

7. La liaison selon l'une quelconque des revendications précédentes, caractérisée en ce que l'un desdits premier et second flancs de filets (116, 117; 118, 119), ou les deux, sont inclinés par rapport à un plan perpendiculaire à l'axe longitudinal formé par la liaison filetée (110).

8. La liaison selon l'une quelconque des revendications précédentes, caractérisée par des moyens classiques (111b) pour assurer une étanchéité entre ledit premier élément (111) et ledit second élément (112) afin d'empêcher un passage de fluide entre eux.

9. La liaison selon l'une quelconque des revendications 1 à 8, dans laquelle lesdits premier et second éléments comprennent respectivement, une broche et un boîtier se correspondant, et dans laquelle un second filet hélicoïdal extérieur effilé en forme générale de queue-d'aronde est formé sur ladite broche, un second filet hélicoïdal intérieur effilé en forme générale de queue-d'aronde étant aussi formé sur ledit boîtier, ledit second filet de broche et ledit second filet de boîtier comportant chacun une paroi de crête de filet plane disposée entre et à proximité une première et une seconde paroi de flanc de filet et comportant une paroi de racine de filet plane disposée à proximité de l'une desdites parois de flanc, la distance entre ladite première paroi de flanc de filet et ladite second paroi de flanc de filet définissant une largeur de filet, lesdites parois de racine et lesdites parois de crête définissant entre elles une zone de jeu de filet, dans laquelle est disposé ledit lubrifiant, et lesdites parois de racine et lesdites parois de crête étant parallèles à l'axe longitudinal de la liaison, une distance axiale au niveau de la paroi de crête entre ladite première paroi de flanc de filet et ladite seconde paroi de flanc de filet définissant une largeur de filet, ladite largeur de filet axiale variant à un degré uniforme sensiblement sur toute la longueur hélicoïdale du filet, lesdites parois de flancs de charge de chaque élément entrant complètement en contact sensiblement en même temps lors de l'établissement par rotation forcée de la liaison filetée, caractérisée en ce que les parois de racine (120, 121) et les parois de crête (124, 125) sont dimensionnées pour venir en contact en éliminant substantiellement ladite zone de jeu et en formant des étanchéités métal-métal lors de l'établissement de la liaison filetée, après quoi une poursuite de l'établissement forcé de la liaison filetée amène les parois de flancs (116, 117) en contact étanche métal-métal sensiblement en même temps lors de l'achèvement de l'établissement par rotation de la liaison filetée.

0 151 574

FIG.1
(PRIOR ART)

FIG. 2
(PRIOR ART)

FIG.3

1

FIG.4

# FIG.5

# FIG.6